# EUROPEAN PATENT APPLICATION

(11) **EP 3 447 660 A1**
(43) Date of publication of application: **27.02.2019**
(21) Application number: 17206129.3
(22) Date of filing: 08.12.2017
(51) Int. Cl.: G06F 17/30

(54) **MACHINE LEARNING BASED DATABASE SYSTEM MANAGEMENT**

(30) Priority: 23.08.2017 US 201715684796
(71) Applicant: SAP SE, 69190 Walldorf (DE)
(72) Inventor: FIERES, Helmut, 69190 Walldorf (DE); DJAMDJI, Jean-Pierre, 69190 Walldorf (DE); DICKGIESSER, Klaus, 69190 Walldorf (DE); KUSHAKOVSKA, Olena, 69190 Walldorf (DE); R, Venkatesh, 69190 Walldorf (DE)
(74) Representative: Richardt Patentanwälte PartG mbB

(57) **Abstract**

A method for machine learning based database management is provided. The method may include training a machine learning model to detect an anomaly that is present and/or developing in a database system. The anomaly in the database system may be detected by at least processing, with a trained machine learning model, one or more performance metrics for the database system. In response to detecting the presence of the anomaly at the database system, one or more remedial actions may be determined for correcting and/or preventing the anomaly at the database system. The one or more remedial actions may further be sent to a database management system associated with the database system. Related systems and articles of manufacture are also provided.

## Description

### Incorporation by reference

The following priority application is herein incorporated by reference in its entirety: US patent application US 15/684,796 filed August 23, 2017

### Field of the invention

The present disclosure relates to database processing and more specifically to the use of machine learning in the management of databases.

### Background

The performance of a database (DB) system may be gauged based on a variety of different performance metrics. For example, the performance of a database system may be gauged based on the response time for executing database queries that include a single structured query language (SQL) statement and/or database transactions that include a sequence of SQL statements. The performance of a database system may also be gauged based on a buffer cache hit ratio, a frequency of errors when updating data held in the database system, and/or a frequency of dumps caused by applications running in the database system. Alternatively and/or additionally, the performance of a database system may be gauged based on the computing resources (e.g., processor, memory, and/or bandwidth) consumed by the operation of the database system.

### Summary

The following definitions are provided to determine how terms used in this application, and in particular, how the claims, are to be construed. The organization of the definitions is for convenience only and is not intended to limit any of the definitions to any particular category.

Performance metric of a DB system, as understood herein, is a metric (a value) characterizing performance of the DB system (e.g. its software or hardware component), the performance metric can be for instance at least one of the following: DB throughput, wherein the DB throughput can be a count per minute for each type of DB operation such as create, insert, update and delete, DB response being DB response time (in milliseconds) for each type of DB operation, DB Connection Use being a number of connections to the DB, performance per SQL statement, application performance per dialog step, DB central processing unit (CPU) utilization, DB memory consumption, application errors, database update process errors, and/or the like, statistics on a number of pages read/written, query cache utilization, locking overhead, DB response time, application response time, etc.

Status of a DB system, as understood herein, is a description of a hardware and/or software configuration of the DB system. The description of the software configuration comprises at least one of the following: description of a structure and/or a content of a DB of the DB system, description of DB object classes, their relationships and/or their object instances, a number and/or specifications of applications using the DB. The description of the hardware configuration of the DB system comprises at least one of the following: a number of central processing units (CPU) of the DB system and/or their processing capacity, memory volume and its type, a number and/or specifications of peripheral hardware and/or software components, a volume of memory allocated for caching, a volume of memory allocated for transaction log buffer, a configuration of discs.

Anomaly in a DB system, as understood herein, is an unwanted consequence of inadequate DB design and/or configuration. The presence and/or development of the anomaly in the DB system can cause an unintentional loss of data and/or increased complexity (e.g. number of SQL statements for execution of a particular procedure) for execution of operations on data stored in a DB of the DB system (e.g. create, retrieve, update operations). In addition, the presence of the anomaly can be a value of observation that deviates from the rule of analogy. For instance, when two DB systems have similar workload and similar data structure stored in their DBs, whereas they show substantially different performance (e.g. one or more different performance metrics), the DB system having worse performance than the other DB system can have the anomaly. The presence and/or development of the anomaly in the DB system can be detected by monitoring a set of performance metrics and/or an actual status of the DB system. When each of the performance metrics of the set does not comply with its respective specification and/or the actual status of the DB system does not comply with the reference description, then the anomaly is present and/or developing in the DB system. Each anomaly can have the following data for its detection: a respective set of performance metrics and a respective set of specifications of the performance metrics of the set. In addition, or as alternative, each anomaly can have a respective reference description of a status of the DB system, which is used for its detection.

A tuning procedure for tuning of a configuration of a DB system, as understood herein, is a procedure for changing a software and/or hardware configuration of the DB system. The changing of the hardware configuration comprises: procedures for changing one or more parameters characterizing the hardware configuration (e.g. changing a memory volume allocated for caching, changing a memory volume allocated for transaction log buffer, changing configuration of discs) and/or a procedures for changing the hardware configuration (e.g. generating a new cache, allocating a new disc for storing data of a DB of the DB system. The changing of the software configuration of the DB system comprises: procedures for changing one or more parameters characterizing the software configuration and/or data structure stored in a DB of the DB system (changing parameters of a DB management system (DBMS) of the DB system, assigning different DB access priorities for applications using the DB of the DB system, optimizing workload (e.g. rescheduling jobs in time), procedures for changing the software configuration (e.g. modifying SQL query optimizer), and/or procedures for changing data structure stored in the DB of the DB system (e.g. generating an index for particular data (e.g. a table) stored in the DB of the DB system). The procedures for changing of the software configuration of the DB system encompass not only procedures for changing of a software configuration of software resources proving operation of the DB (e.g. DBMS) but procedures for changing of a software configuration of peripheral components (e.g. an application using the DB of the DB system) and peripheral software resources providing operation the peripheral components (e.g. a software platform (e.g. operating system (OS)) providing operation of applications using the DB). The procedures for changing of the hardware configuration of the DB system encompass not only procedures for tuning of a hardware configuration of hardware resources proving operation of the DB (e.g. memory storing data of the DB of the DB system) but procedures for changing of a hardware configuration of peripheral hardware resources providing operation of peripheral components (e.g. a server providing hardware resources of applications using the DB of the DB system).

A term "cloud management platform" may be replaced herein by a term "machine learning system for DB management". A term "machine learning based database management system" may be replaced herein by the term "machine learning system for DB management".

Tuning of a DB system comprises tuning of various components of the DB system, such as a DB for storing data, a DB management system for operating the DB, applications using the DB, hardware platform used for execution of the DB, the DBMS, and/or the applications. Each of these components can have a lot of tuning parameters. As a consequence, the tuning of the DB system is a complex procedure. The complexity of the tuning procedure is determined not only by a number of the tuning parameters, but by an interrelated influence of these parameters on the performance of the DB system. In other words it is not possible to find optimal tuning parameters by tuning them one by one. A lot of tuning parameters have to be tuned simultaneously in order to provide optimal performance of the DB system. In addition the tuning has to be performed on a periodic basis, because of changes in the DB system. For instance, the data stored in the DB and a work load of the DB are being instantly changed. The approach disclosed herein addresses these issues by applying machine learning (ML) for tuning DB systems. It is based on collecting of status information, performance metrics, and/or tuning procedures for tuning the DB from a plurality of DB systems. A ML module is trained using the information received from the plurality of the DB systems, whereas the trained ML module is used for tuning a single DB system, which does not necessarily have to be one of the databases which data is used for the training of the ML module.

It is an objective of embodiments of the invention to provide for a machine learning (ML) system for DB system management, a computer-implemented method for DB system management, a computer program comprising instructions that enable a processor-based ML system to manage one or more DB systems, a DB system, and a computer program comprising instructions that enable a processor-based DB system to manage the DB system. Advantageous embodiments are described in the dependent claims.

In one aspect the invention provides for a ML system for DB system management. The ML system comprises an ML module. The ML module is coupled to a first and a second DB system for receiving respective sets of DB status information. The ML system is configured to generate a training result by training the ML module using the sets of DB status information. The training result is descriptive of a configuration of the trained ML module. At least the first DB system comprises a first local DB system configuration tuner for tuning a configuration of the first DB system. The first DB system is configured to receive the training result and to configure the first local DB system configuration tuner using the training result as a configuration parameter. The ML system can further comprise at least a first and a second DB system. The ML system can cause the first DB system to receive the training result and to configure the first local DB system configuration tuner using the training result as the configuration parameter.

In another aspect the invention provides for a computer-implemented method for management of at least a first and a second DB system by a ML system comprising a ML module, wherein at least the first DB system comprises a first local DB system configuration tuner for tuning a configuration of the first DB system, wherein the ML system is coupled to the first and the second DB system for the receiving respective sets of the DB status information. The method comprises: receiving by the ML system respective sets of DB status information from the first and the second DB system; generating, by the ML system, a training result by training the ML module using the sets of DB status information, wherein the training result is descriptive of a configuration of the trained ML module; transferring the training result to the first DB system; and configuring by the first DB system the first local DB system configuration tuner using the training result as a configuration parameter. The configuring by the first DB system of the first local DB system configuration tuner can be caused by the ML system. The ML system can comprise the first and the second DB system.

In another aspect the invention provides for a computer program comprising instructions that enable a processor-based ML system comprising a ML module to: receive respective sets of DB status information from a first and a second DB system, wherein the first DB system comprises a first local DB system configuration tuner for tuning a configuration of the first DB system; generate a training result by training the ML module using the sets of DB status information, wherein the training result is descriptive of a configuration of the trained ML module; transfer the training result to the first DB system, and configure by the first DB system the first local DB system configuration tuner using the training result as a configuration parameter. The configuring by the first DB system of the first local DB system configuration tuner can be caused by the ML system. The ML system can be coupled to the first and the second DB system for the receiving respective sets of the DB status information.

In another aspect the invention provides for a DB system comprising a local DB system configuration tuner for tuning a configuration of the DB system. The DB system is configured to: transfer a set of DB status information of the DB system to a ML module of an ML system for managing at least the DB system and another DB system; receive, from the ML system, a training result, wherein the training result is generated by training the ML module using the set of DB status information and another set of DB status information of the other DB system; and configure the local DB system configuration tuner using the received training result as a configuration parameter.

In another aspect the invention provides for a computer program comprising instructions that enable a processor-based DB system comprising a local DB system configuration tuner for tuning a configuration of the DB system to: transfer a set of DB status information of the DB system to a machine learning, ML, module of an ML system for managing at least the DB system and another DB system; receive, from the ML system, a training result, wherein the training result is generated by training the ML module using the set of DB status information and another set of DB status information of the other DB system; and configure the local DB system configuration tuner using the received training result as a configuration parameter.

These embodiments can be advantageous, because they can provide for an effective management of the DB systems. The data accumulated from various DB systems can be used for management of a single DB system. Moreover, after the configuration of the local DB system configuration tuner the DB system comprising the configured local DB system configuration tuner can be tuned autonomously by the configured local DB system configuration tuner without the need of further communication with the ML system.

Systems, methods, and articles of manufacture, including computer program products, are further provided for merging multiproviders. In one aspect, the invention provides for a computer system. The system may include at least one data processor and at least one memory. The at least one memory may store instructions that result in operations when executed by the at least one data processor. The operations may include: training a machine learning model to detect an anomaly that is present and/or developing in a database system; detecting the anomaly in the database system by at least processing, with a trained machine learning model, one or more performance metrics for the database system; and in response to detecting the presence of the anomaly at the database system: determining one or more remedial actions for correcting and/or preventing the anomaly at the database system; and sending, to a database management system associated with the database system, the one or more remedial actions.

In another aspect, the invention provides for a computer-implemented method. The method comprises the following: training a machine learning model to detect an anomaly that is present and/or developing in a database system; detecting the anomaly in the database system by at least processing, with a trained machine learning model, one or more performance metrics for the database system; and in response to detecting the presence of the anomaly at the database system: determining one or more remedial actions for correcting and/or preventing the anomaly at the database system; and sending, to a database management system associated with the database system, the one or more remedial actions.

In another aspect, the invention provides for a non-transitory computer-readable storage medium including program code, which when executed by at least one data processor, causes operations comprising: training a machine learning model to detect an anomaly that is present and/or developing in a database system; detecting the anomaly in the database system by at least processing, with a trained machine learning model, one or more performance metrics for the database system; and in response to detecting the presence of the anomaly at the database system: determining one or more remedial actions for correcting and/or preventing the anomaly at the database system; and sending, to a database management system associated with the database system, the one or more remedial actions.

In another embodiment, the ML system is coupled to the first DB system and the second DB system via one or more computer networks.

This embodiment can be advantageous, because it can provide for an extra flexibility and improved modularity of the ML system. Various components placed in remote locations can be integrated in the ML system. For instance, integration of another DB system in the ML system requires establishing of another computer network connection, which can be easily implemented using the ubiquitous Internet.

In another embodiment, the ML system comprises a third DB system. The third DB system comprises a third local DB system configuration tuner for tuning a configuration of the third DB system. The third DB system is configured to receive the training result obtained by the ML system and to configure the third local DB system configuration tuner using the training result as a configuration parameter therefore.

This embodiment can be advantageous, because it can provide for performance improvement of a DB system which data is not used for the generation of the training result. This can be of particular advantage when the DB system is a newly installed system which operation has to be started for the first time. Optimization of the DB system configuration being executed from scratch can take a lot of time. This optimization of the configuration can be substantially accelerated when the local DB system configuration tuner of this DB system is configured using the training result obtained using data from the DB systems which configuration is already optimized.

In another embodiment, the ML module is coupled to the first and the second DB system for receiving further respective sets of DB status information. The ML system is configured to generate a further training result by further training the ML module using the further sets of DB status information. The further training result is descriptive of a configuration of the further trained ML module. The first DB system is configured to receive the further training result and to configure the first local DB system configuration tuner using the further training result as a configuration parameter.

This embodiment can be advantageous, because it can provide for continuous iterative optimization of the DB system configuration tuning performance. The data received from the DB systems being already configured by their local DB system configuration tuners which are configured using the training result, can be further used for further training of the ML module. In its own turn the training result obtained by the further training of the ML module can be used for configuring of at least one of said local DB system configuration tuners.

In another embodiment, the ML system comprises a server. The server is configured for providing the coupling of the ML module to the first and the second database. The server comprises the ML module.

This embodiment can be advantageous, because it can provide for an extra flexibility and improved modularity of the ML system. The server can be implemented as a standalone hardware and/or software unit, which can be placed in any remote location or in a computer cloud. The integration of the server in the ML system requires establishing of another computer network connection, which can be easily implemented using the ubiquitous Internet.

In another embodiment, operation of the ML module and the first local DB system configuration tuner is based on at least one of the following ML models: a neural network, a classifier, a decision tree, a Bayesian network, a regression analyzer, and a support vector machine.

This embodiment can be advantageous because it can provide for a simplified procedure for configuration of the local DB system configuration tuner. When the operation of the local DB system configuration tuner and the ML module is based on the same ML module, then configuration of the local DB system configuration tuner can require transferring from the ML module to the local DB system configuration tuner only configuration parameters of the ML model, e.g. weight coefficients of a neural network. When the operation of the local DB system configuration tuner and the ML module is based on different ML models, then configuration of the local DB system configuration tuner can require transferring from the ML module to the local DB system configuration tuner of a software code of the ML model. Moreover this embodiment can provide for a reduction of data traffic volume between the ML module (or ML system) and the first DB system because a data volume of the configuration parameters to be transferred can be less than a data volume of the software code to be transferred.

In another embodiment, the configured first local DB system configuration tuner is configured to identify a tuning procedure for tuning the configuration of the first DB system in accordance with an actual status of the first DB system and to execute the identified tuning procedure.

This embodiment can be advantageous, because after the configuration of the local DB system configuration tuner it can operate on the first DB system autonomously. There can be no need to communicate every time with the ML module (or ML system) for identifying each of the tuning procedures for tuning the configuration of the first DB system.

In another embodiment, the trained ML module is configured to receive an actual status of the first DB system and to identify a tuning procedure for tuning the configuration of the first DB system in accordance with the received actual status of the first DB system. The first local DB system configuration tuner is configured to execute the tuning procedure identified by the trained ML module.

This embodiment can be advantageous, because it can provide for identification of the tuning procedure using the most recent algorithm. The ML module can be further trained using data received from the DB systems after the execution of the configuration of the first local DB system configuration tuner.

In another embodiment, the set of DB status information received from the first DB system comprises a first time series of first descriptions each being descriptive of an actual status of the first DB system at a respective point of time, wherein the set of DB status information received from the second DB system comprises a second time series of second descriptions each being descriptive of an actual status of the second DB system at a respective point of time.

This embodiment can be advantageous, because it can provide for training of the ML module using time-ordered data. As a result thereof the trained ML module and/or the configured local DB system configuration tuner can be operable for predicting at least one of the following for a future point of time: the actual status of the DB system, the performance metric of the DB system, a tuning procedure for tuning of a configuration of the DB system, an anomaly being present and/or developing in the DB system, wherein the predicted data is generated by processing one or more descriptions of the DB system status each being descriptive of the actual DB system status at a respective point of time.

In another embodiment, the set of DB status information received from the first DB system further comprises descriptions of tuning procedures executed for tuning of the configuration of the first DB system in a time interval of the first time series. The set of DB status information received from the second DB system further comprises descriptions of tuning procedures executed for tuning of a configuration of the second DB system in a time interval of the second time series.

This embodiment can be advantageous, because it can provide for proactive identification of the tuning procedure by the trained ML module and/or the configured first local DB system configuration tuner.

In another embodiment, the set of DB status information received from the first DB system comprises a first time series of first descriptions each being descriptive of an actual status of the first DB system at a respective point of time. The set of DB status information received from the second DB system comprises a second time series of second descriptions each being descriptive of an actual status of the second DB system at a respective point of time. The first DB system is configured to generate another first time series of first performance metrics. The generation of the other first time series of the first performance metrics comprises generating, for each of the first descriptions, the first performance metric being descriptive of an actual performance of the first DB system at the point of time at which the each of the first descriptions is descriptive of the actual performance of the first DB system. The second DB system is configured to generate another second time series of second performance metrics. The generation of the second time series comprises generating, for each of the second descriptions, the second performance metric being descriptive of an actual performance of the second DB system at the point of time at which the each of the second descriptions is descriptive of the actual performance of the second DB system. The generating of the training result by training the ML module using the sets of DB status information comprises training the ML module using a first and a second training data. The first training data comprises input data being the first time series of the first descriptions data and expected output data being the other first time series of the first performance metrics. The second training data comprises input data being the second time series of the second descriptions and expected output data being the other second time series of the second performance metrics. The configured first local DB system configuration tuner is configured to obtain a predicted first performance metric being descriptive of an expected performance of the first DB system at a future point of time by processing one or more first descriptions each being descriptive of an actual status of the first DB system at a respective point of time. The configured first local DB system configuration tuner is configured to tune the configuration of the first DB system by executing a tuning procedure for tuning of the configuration of the first DB system, when the predicted first performance metric is out of a specification of the first performance metric. The trained ML module can be configured to obtain a predicted performance metric being descriptive of an expected performance of a DB system at a future point of time by processing one or more descriptions each being descriptive of an actual status of the first DB system at a respective point of time. The DB system can be at least any one of the following: the first and the second DB system. The performance metric can be at least any one of the following: the first performance metric and the second performance metric. The description can be at least any one of the following: the first description and the second description.

This embodiment can be advantageous, because it can provide for proactive generation of the performance metric by the trained ML module and/or the configured first local DB system configuration tuner, wherein the generated performance metric can be used for triggering the execution of the tuning procedure.

In another embodiment, the set of DB status information received from the first DB system comprises a first time series of first performance metrics each being descriptive of an actual performance of the first DB system at a respective point of time, the set of DB status information received from the second DB system comprises a second time series of second performance metrics each being descriptive of an actual performance of the second DB system at a respective point of time. The generating of the training result by training the ML module using the sets of DB status information comprises training the ML module using the first time series of the first performance metrics and the second time series of the second performance metrics as training data. The trained ML module is configured to detect an anomaly being present and/or developing in the DB system by processing one or more performance metrics each being descriptive of an actual performance of the DB system at a respective point of time. The configured first local DB system configuration tuner is configured to detect an anomaly being present and/or developing in the first DB system by processing one or more first performance metrics each being descriptive of an actual performance of the first DB system at a respective point of time. The configured first local DB system configuration tuner is configured to tune the configuration of the first DB system by executing a tuning procedure for tuning of the configuration of the first DB system in response to the detection of the anomaly being present and/or developing in the first DB system. The DB system can be at least any one of the following: the first DB system and the second DB system. The performance metric can be at least any one of the following: the first performance metric and the second performance metric.

This embodiment can be advantageous, because it can provide for proactive identification of the anomaly by the trained ML module and/or the configured first local DB system configuration tuner, wherein the tuning procedure to be used for configuration tuning of the DB system is identified in accordance with the predicted anomaly.

In another embodiment, the set of DB status information received from the first DB system comprises a first time series of first descriptions each being descriptive of an actual status of the first DB system at a respective point of time and another first time series of descriptions of tuning procedures executed for tuning the configuration of the first DB system in a time interval of the first time series. The set of DB status information received from the second DB system comprises a second time series of second descriptions each being descriptive of an actual status of the second DB system at a respective point of time and another second time series of descriptions of tuning procedures executed for tuning a configuration of the second DB system in a time interval of the second time series. The generating of the training result by training the ML module using the sets of DB status information comprises training the ML module using a first and a second training data. The first training data comprises input data being the first time series of the first descriptions and expected output data being the other first time series of the descriptions. The second training data comprises input data being the second time series of the second descriptions and expected output data being the other second time series of the descriptions. The configured first local DB system configuration tuner is configured to identify a tuning procedure for tuning the configuration of the first DB system by processing one or more first descriptions each being descriptive of an actual status of the first DB system at a respective point of time and to execute the identified tuning procedure. The trained ML module may be configured to identify a tuning procedure for tuning a configuration of a DB system by processing one or more descriptions each being descriptive of an actual status of the DB at a respective point of time. The DB system may be at least any one of the following: the first and the second DB system. The performance metrics may be at least any one of the following: the first performance metric and the second performance metric.

This embodiment can be advantageous, because it can provide for direct proactive identification of the tuning procedure by the trained ML module and/or the configured first local DB configuration.

In some variations, one or more features disclosed herein including the following features can optionally be included in any feasible combination. The training of the machine learning model may include processing, with the machine learning model, a plurality of performance metrics that are known to correspond to the presence of the anomaly. The one or more performance metrics for the database system may be received from the database management system. The one or more performance metrics may include performance per structured query language (SQL) statement, application performance per dialog step, database central processing unit (CPU) utilization, database memory consumption, application errors, and/or database update process errors.

In some variations, the trained machine learning model may be sent to the database management system. The trained machine learning model may be sent to the database management system to enable the one or more performance metrics to be processed at the database management system. At least one update for the trained machine learning model may also be sent to the database management system.

In some variations, the machine learning model may include a neural network, a classifier, a decision tree, a Bayesian network, a regression analyzer, and/or a support vector machine. The one or more remedial actions may include a parameter change at the database system and/or a parameter change for an application running at the database system.

In some variations, the database management system may be configured to execute the one or more remedial actions. The one or more remedial actions may be sent to the database management system using a generic data format. The one or more remedial actions may be sent to the database management system as structured data and/or unstructured data in a raw string format.

Implementations of the current subject matter can include, but are not limited to, methods consistent with the descriptions provided herein as well as articles that comprise a tangibly embodied machine-readable medium operable to cause one or more machines (e.g., computers, etc.) to result in operations implementing one or more of the described features. Similarly, computer systems are also described that may include one or more processors and one or more memories coupled to the one or more processors. A memory, which can include a non-transitory computer-readable or machine-readable storage medium, may include, encode, store, or the like one or more programs that cause one or more processors to perform one or more of the operations described herein. Computer implemented methods consistent with one or more implementations of the current subject matter can be implemented by one or more data processors residing in a single computing system or multiple computing systems. Such multiple computing systems can be connected and can exchange data and/or commands or other instructions or the like via one or more connections, including, for example, to a connection over a network (e.g. the Internet, a wireless wide area network, a local area network, a wide area network, a wired network, or the like), via a direct connection between one or more of the multiple computing systems, etc.
It is understood that one or more of the aforementioned embodiments of the invention may be combined as long as the combined embodiments are not mutually exclusive.
In accordance with another aspect of the invention a computer program comprising instructions that enable a processor-based DB system (119A) comprising a local DB system configuration tuner (117A) for tuning a configuration of the DB system to:
- transfer a set of DB status information of the DB system to a machine learning, ML, module (114) of an ML system (110) for managing at least the DB system (119A) and another DB system (119B),
- receive, from the ML system, a training result, wherein the training result is generated by training the ML module using the set of DB status information and another set of DB status information of the other DB system, and
- configure the local DB system configuration tuner using the received training result as a configuration parameter is provided.

The details of one or more variations of the subject matter described herein are set forth in the accompanying drawings and the description below. Other features and advantages of the subject matter described herein will be apparent from the description and drawings, and from the claims. While certain features of the currently disclosed subject matter are described for illustrative purposes in relation to web application user interfaces, it should be readily understood that such features are not intended to be limiting. The claims that follow this disclosure are intended to define the scope of the protected subject matter.

### Brief Description of the Drawings

The accompanying drawings, which are incorporated in and constitute a part of this specification, show certain aspects of the subject matter disclosed herein and, together with the description, help explain some of the principles associated with the disclosed implementations. In the drawings,
**FIG. 1a** depicts an example system diagram illustrating a machine learning based database management system;
**FIG. 1b** depicts another example system diagram illustrating a machine learning based database management system;
**FIG. 2** depicts an example machine learning engine;
**FIG. 3** depicts an example data storage scheme for storing training data;
**FIG. 4A** depicts an example flowchart illustrating a process for machine learning based database management;
**FIG. 4B** depicts an example flowchart illustrating a process for machine learning based database management;
**FIG. 5** depicts an example block diagram illustrating a computing system.

When practical, similar reference numbers denote similar structures, features, or elements.

### Detailed Description

Performance of the DB system can be characterized/determined by various data, such as status information, performance metrics, anomalies, and/or tuning procedures used for configuration tuning of the DB system. In particular, different performance metrics such as, for example, performance per SQL statement, application performance per dialog step, database central processing unit (CPU) utilization, database memory consumption, application errors, database update process errors, and/or the like, may be used to determine the current operational state of a database system. Poor performance metrics may indicate the presence of anomalies within the database system such as, for example, bottlenecks and/or the like, that can lead to abnormal and/or undesirable behavior. However, anomalies may be present and/or developing within the database system even when the current performance metrics of the database system are not objectively poor. As such, an ML module, a local DB system configuration tuner, and/or a DBMS may be configured to perform at least one of the following: detecting anomalies that are present and/or developing within a database system, predicting one or more performance metrics, and/or to identifying one or more tuning procedures for tuning of a configuration of the DB system, by at least processing, with a trained ML model, one or more descriptions of an actual DB status of a DB system, one or more performance metrics of the DB system, and/or a description of one or more tuning procedures executed for configuration tuning of the DB system. Operation of the trained ML module, the DBMS system, and/or the local DB system configuration tuner can be based on the trained ML module. The data for processing can be received from the one or more DB systems by the DBMS and/or the ML module. The machine learning model may be trained to detect anomalies using training data that includes, for example, performance metrics that are known to correspond to the presence of existing and/or developing anomalies. In response to detecting an anomaly, the database management system may be configured to determine remedial actions for correcting the anomaly.

The machine learning model of the DBMS, the local DB system configuration tuner, and/or the ML module may be trained in various ways. For instance the descriptions of actual status of one or more DB systems can be used as input data and performance metrics of the one or more DB systems can be used as expected data for the supervised learning, wherein the description of actual status of the DB system registered at a point of time is used as an input value and the performance metrics of the same DB system registered at the same point of time is used as a respective expected value. As a result thereof, the trained ML model is operable for generating a predicted performance metric by processing a description of the actual status of the DB system. The training can be performed such that time aspect is taken into account. In this case, each of the descriptions of the actual status of the DB system can have a time stamp, wherein the time stamp is descriptive of a point of time when the DB system had status as specified in the description of the actual status of the DB. The input data used for the training (supervised learning) comprises a time series of status descriptions of the actual status of the DB system and the expected data used for the training comprises respective time series of the performance metrics of the same DB system. The descriptions of the actual status in the time series are ordered therein in a sequence according to their time stamps. The performance metrics in the time series are ordered in the same sequence as their respective descriptions of the actual status are ordered in their time series. The ML model can be trained using time series received from several DB systems. As a result thereof, the trained ML model is operable for generating a predicted performance metric at a future point of time by processing one or more descriptions of the actual status of the DB system, wherein each of the one or more descriptions is descriptive of the actual status of the DB system at a respective point of time.

The input and the expected data can be selected in a different way. The input data can comprise the descriptions of the actual status of the DB system each comprising the respective performance metric. Alternatively the input data can comprise only the performance metrics. The expected data can comprise descriptions of anomalies which are known to correspond to the input data. For instance the anomaly can be present of developing in the DB system when one or more the performance metrics are out of their specifications (or within alert specifications) and/or one or more descriptions of the actual status are out of their specifications (or within alert specifications). The input data and the expected data can have the same structure as mentioned above, e.g. time series of data. In this case, the input data used for the training (supervised learning) comprises the aforementioned time series of the status descriptions and/or the aforementioned time series of the performance metrics and the expected data used for the training comprises time series of anomaly descriptions each being descriptive of an anomaly being present in the DB system at a respective point in time. The time series of data used as the input data and times series of data used as expected output data are interleaved time series of data. In other words a time interval of the time series of data used as the input data and a time interval of the time series of data used as expected output data substantially overlap or the same. The ML model can be trained using time series of data received from several DB systems. The trained ML model is operable to detect an anomaly, which can be present and/or developing in the DB system by processing at least one of the following: a description of an actual status of the DB system; one or more descriptions of the actual status of the DB system each being descriptive of the DB system at a respective point of time; a performance metric of the DB system; one or more performance metrics of the DB system each being descriptive of the actual performance of the DB system at a respective point of time.

The input and the expected data can be selected in yet another way. The input data can comprise the descriptions of the actual status of the DB system each comprising the respective performance metric. Alternatively the input data can comprise only the performance metrics. The expected data can comprise descriptions of tuning procedures executed for tuning of a configuration of the DB system. The input data and the expected data can have the same structure as mentioned above, e.g. time series of data. In this case, the input data used for the training (supervised learning) comprises the aforementioned time series of the status descriptions and/or the aforementioned time series of the performance metrics and the expected data used for the training comprises time series of tuning procedures executed for tuning the configuration of the DB system in a time interval one or more time series of data comprised in the input data. The ML model can be trained using time series of data received from several DB systems. The trained ML model is operable to identify a tuning procedure for tuning the configuration of the DB system by processing at least one of the following: a description of an actual status of the DB system; one or more descriptions of the actual status of the DB system each being descriptive of the DB system at a respective point of time; a performance metric of the DB system; one or more performance metrics of the DB system each being descriptive of the actual performance of the DB system at a respective point of time.

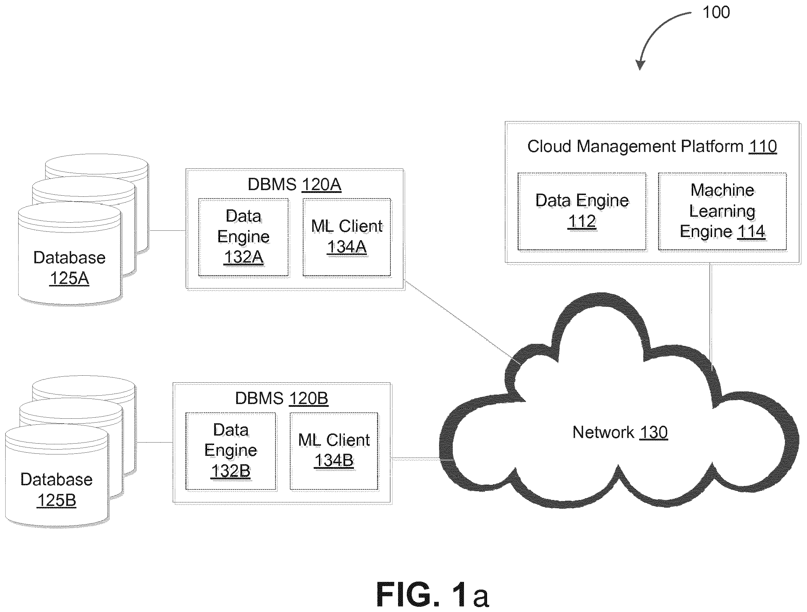

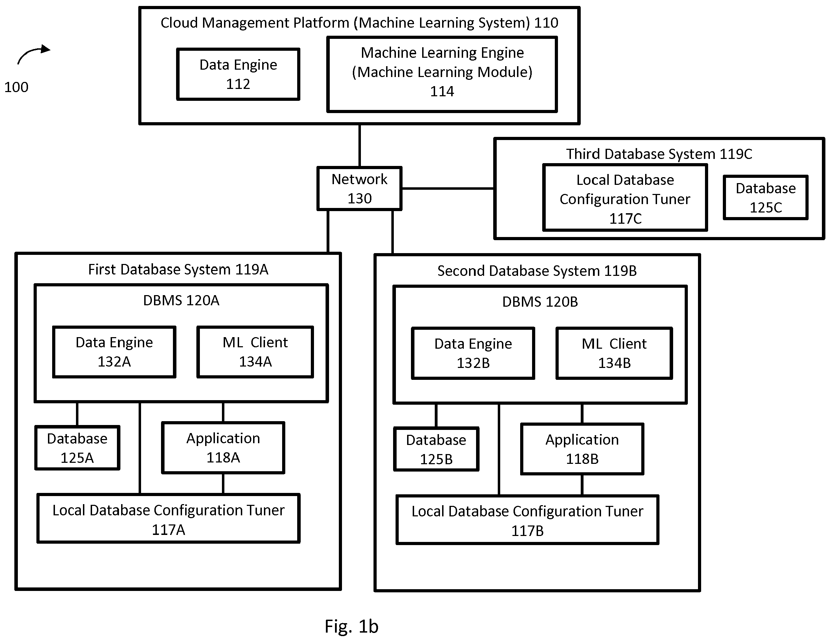

FIGS. 1 a and b depict a system diagram illustrating a machine learning based database management system 100 (or a ML system for DB system management (100)). Referring to FIGS. 1 a and b, the machine learning based database management system 100 may include a cloud management platform 110 (or another ML system for DB system management 110). The ML system for DB system management 100 comprises a computer processor and a memory storing instructions, which when executed by the computer processor cause the ML system for DB system management 100 to execute operations/procedures described herein. The ML system for DB system management 110 comprises a computer processor and a memory storing instructions, which when executed by the computer processor cause the ML system for DB system management 110 to execute operations/procedures described herein. Furthermore, the cloud management platform 110 may be communicatively coupled, via a network 130, to one or more database management systems and/or the ML system 110 may be communicatively coupled, via the network 130, to one or more DB systems. For example, the cloud management platform 110 may be communicatively coupled with a first database management system 120A or the ML system 110 may be communicatively coupled with a first DB system 119A. The first DB system 119A may include at least one of the following components: the first DBMS 120A, a first DB 125A, a first local DB system configuration tuner 117A, a first application 118A, and a first hardware/software platform (e.g. server) for execution of the first application 118A. The first database management system 120A may include a second data engine 132A and a first machine learning client 134A, alternatively the second data engine 132A can be included in the first DB system 119A as a separate component and/or the first machine learning client 134A can be included in the first DB system 119A as a separate component. The first database management system 120A may be coupled with a first database 125A. The first application 118A may be coupled to the first DB 125A, e.g. via the first DBMS 120A. The first application 118A is operable for accessing/processing data stored in the first DB 125A. The first local DB system configuration tuner 117A is configured to tune a configuration of the first DB system 119A.

Alternatively and/or additionally, the cloud management platform 110 may be communicatively coupled with a second database management system 120B and/or the ML 110 system may be communicatively coupled with a second DB system 119B. The second DB system 119B may include at least one of the following components: the second DBMS 120B, a second DB 125B, a second local DB system configuration tuner 117B, a second application 118B, and a second hardware/software platform (e.g. server) for execution of the second application 118B. The second database management system 120B may include a third data engine 132B and a second machine learning client 134B, alternatively the third data engine 132B can be included in the second DB system 119B as a separate component and/or the second machine learning client 134B can be included in the second DB system 119B as a separate component. The first application 118A may be coupled to the first DB 125A, e.g. via the first DBMS 120A. The second database management system 120B may be coupled with a second database 125B. The second application 118B is operable for accessing/processing data stored in the second DB 125B. The second local DB system configuration tuner 117B is configured to tune a configuration of the second DB system 119B.

The ML system 110 may be coupled to one or more other DB systems. Each of the other DB systems comprises a DB and a respective local DB system configuration tuner for tuning a configuration of the each of the other DB systems. Each of the other DB systems can comprise the same components as the first DB system 119A. FIG. 1b depicts a third DB system 119C being an example of the other DB system. The third DB system 119C comprises a third DB 125C and a third local DB system configuration tuner 117C for tuning a configuration of the third DB system 119C. Each of the DB systems comprises a computer processor and a memory storing instructions, which when executed by the computer processor cause the each of the DB systems to execute operations/procedures described herein.

It should be appreciated that the network 130 may be any wired and/or wireless network including, for example, a wide area network (WAN), a local area network (LAN), a public land mobile network (PLMN), the Internet, and/or the like. Furthermore, the first database 125A and/or the second database 125B may be any type of database including, for example, an in-memory database, a relational database, a non-SQL (NoSQL) database, and/or the like.

As shown in FIGS. 1a and b, the cloud management platform 110 may include a first data engine 112 and a machine learning engine/module 114. The ML engine/module is communicatively coupled to the local DB system configuration tuners (e.g. 117A, 117B, 117C) of the DB systems. The machine learning engine/module 114 may be configured to generate one or more trained machine learning models including, for example, neural networks, classifiers, decision trees, Alternatively the ML engine/module can comprise the ML model. In this case generation of the one or more trained ML models comprises training of the ML engine/module 112. Bayesian networks, regression analyzers, support vector machines, and/or the like. The trained machine learning models may be generated by at least training one or more machine learning models using training data that includes, for example, performance metrics of one or more DB systems and/or DBs (input training data) and/or status information of the one or DB systems that are known to correspond to the presence of existing and/or developing anomalies (expected output training data). The trained ML models may be generated by at least training one or more machine learning models using training data, wherein status information of one or more DB systems and/or DBs is used as input training data and performance metrics of the one or more DB systems and/or DBs are used as expected output training data. In addition, the trained ML models may be generated by at least training one or more machine learning models using training data, wherein status information of one or more DB systems and/or performance metrics of the one or more DB systems are used as input training data and descriptions of tuning procedures for configuration tuning of the one or more DB systems are used as expected output training data. The input training data and the expected output training data can be in a form of time series as described above. For example, a machine learning model may be trained via one or more supervised and/or unsupervised learning techniques. Training the machine learning model may include optimizing the weights and/or biases applied by the machine learning model in order to minimize an error in an output of the machine learning model.

The machine learning engine/module 114 may deploy the trained machine learning models locally, for example, at the first machine learning client 134A, the second machine learning client 134B, and/or any of the local DB system configuration tuners 117A-C. Alternatively and/or additionally, the trained machine learning models may also be deployed as a cloud-based and/or web-based service that is accessible to the first database management system 120A and/or the second database management system 120B via the network 130.

The ML module/engine 114 and as option the data engine 112 can be locally deployed on (comprised in) a server of the ML system for DB system management 100 or 110. The server can be implemented as hardware remote server or as virtual server. The server provides communicative coupling of the ML module/engine to the local DB configuration DB tuners (e.g. 117A-C).

The first database management system 120A, for example, the second data engine 132A, may collect performance metrics for the first database 125A while the second database management system 120B, for example, the third data engine 132B, may collect performance metrics for the second database 125B. The first local DB system configuration tuner can comprise 117A may comprise the second data engine 132A. The second local DB system configuration tuner can comprise 117B may comprise the third data engine 132B. As noted, one or more trained machine learning models may be deployed locally, for example, at the first machine learning client 134A, any of the local DB system configuration tuners 117A-C, and/or the second machine learning client 134B. Accordingly, the detection of anomalies at the first database 125A and/or the second database 125B may be performed locally, for example, by the first machine learning client 134A, any of the local DB system configuration tuners, and/or the second machine learning client 134B. Furthermore, the first machine learning client 134A (or the first local DB system configuration tuner 117A) and/or the second machine learning client 134B (or the second local DB system configuration tuner 117B) may determine one or more remedial actions for correcting the anomalies at the first database 125A and/or the second database 125B.The remedial action can be a tuning procedure for tuning of a configuration of a DB system. For example, the first machine learning client 134A (or the first local DB system configuration tuner 117A) may detect anomalies present and/or developing at the first database 125A by at least processing, with the trained machine learning models deployed at the first machine learning client 134A (or the first local DB system configuration tuner 117A), the performance metrics collected by the first database management system 120A (or by the second data engine 132A of the first local DB system configuration tuner 117A). In response to detecting one or more anomalies at the first database 125A, the first machine learning client 134A (or the first local DB system configuration tuner 117A) may determine one or more remedial actions. The first database management system 120A (or the first local DB system configuration tuner 117A) may perform at least some of the remedial actions in order to correct and/or prevent the anomalies at the first database 125A.

Alternatively and/or additionally, the second machine learning client 134B (or the second local DB system configuration tuner 117B) may detect anomalies present and/or developing at the second database 125B by at least processing, with the trained machine learning models deployed at the second machine learning client 134B (or the second local DB system configuration tuner 117B), the performance metrics collected by the second database management system 120B (or by the third data engine 132B the second local DB system configuration tuner 117B). The second machine learning client 134B (or the second local DB system configuration tuner 117B) may determine one or more remedial actions in response to detecting one or more anomalies at the second database 125B. Furthermore, the second database management system 120B (or the second local DB system configuration tuner 117B) may perform at least some of the remedial actions in order to correct and/or prevent the anomalies at the second database 125B.

The local DB system configuration tuner can be configured to identify a tuning procedure for tuning a configuration the DB system in accordance with the actual status of the DB system and to execute the identified tuning procedure. These procedures are executed locally by the local DB system configuration tuner on the DB system comprising the local DB system configuration tuner and one or more trained ML models. These procedures can be implemented as follows. The local DB system configuration tuner 117A-C collects/generates information related to status and/or performance of the DB system 119A-C. Alternatively or in addition the local DB system configuration tuner can cause the data engine 132A, B to collect/generate information related to the status and/or performance of the DB system. The information related to status and/or performance of the DB system comprises at least one of the following: a description of actual status of the DB system at a point of time, wherein the description may comprise or have assigned a time stamp being descriptive of that point of time; a performance metric being descriptive of a performance of the DB system at a point of time, wherein the performance metric can have assigned a time stamp being descriptive of that point of time; a description of a tuning procedure executed for tuning the configuration of the DB system, wherein the description of the tuning procedure can comprise or have assigned a time stamp being descriptive of a point of time or time interval when the tuning procedure was executed. The locally collected status and/or performance information can be used by the local DB system configuration tuner for generation of at least one of the following results using one or more trained ML models: detection of an anomaly being present or developing in the DB system, generation of a predicted performance metric being descriptive of an expected performance of the DB system at a future point of time, identification of tuning procedure for tuning the configuration of the DB system. In response to the identification of the tuning procedure, the local DB system configuration tuner executes the identified tuning procedure on the DB system.

In response to the detection of the anomaly, the local DB system configuration tuner can identify the tuning procedure by accessing a locally stored list of descriptions of anomalies and corresponding tuning procedures. After identifying in the list the description of the detected anomaly, the local DB system configuration tuner identifies a tuning procedure corresponding to the identified description and executes the identified tuning procedure on the DB system.

In response to the generation of the predicted performance metric, the local DB system configuration tuner can identify the tuning procedure by accessing a locally stored list of descriptions of performance metrics and their respective specifications and tuning procedures. In the list, each performance metric has its respective description, specification, and a tuning procedure. After identifying in the list a description of the generated predicted performance metric, the local DB system configuration tuner identifies a corresponding specification for the generated predicted performance metric. When the generated predicted performance metric is out of its specification, the local DB tuner further identifies a corresponding tuning procedure and executes the identified tuning procedure on the DB system.

The ML module/engine 114 can be configured to identify a tuning procedure for tuning a configuration the DB system in accordance with the actual status of the DB system and to cause execution of the identified tuning procedure on the DB system. These procedures can be implemented as follows. The local DB system configuration tuner of the DB system 117A-C collects/generates information related to status and/or performance of the DB system 119A-C. Alternatively or in addition the local DB system configuration tuner of the DB system can cause the data engine 132A, B of the DB system to collect/generate the aforementioned information related to the status and/or performance of the DB system. The locally collected status and/or performance information is sent by the local DB system configuration tuner to the ML engine/module 114 comprising one or more trained ML models. The received status information is used by the ML engine/module for generation of at least one of the following results using the one or more trained ML models: detection of an anomaly being present or developing in the DB system, generation of a predicted performance metric being descriptive of an expected performance of the DB system at a future point of time, identification of tuning procedure for tuning the configuration of the DB system. In repose to the identification of the tuning procedure, the ML engine/module causes the local DB system configuration tuner to execute the identified tuning procedure on the DB system.

In response to the identification of the anomaly, the ML engine/module identifies the tuning procedure by accessing a list of descriptions of anomalies and corresponding tuning procedures. The list is stored in the memory of the ML system 100. After identifying in the list the description of the detected anomaly, the ML engine/module identifies a tuning procedure corresponding to the identified description and causes the local DB system configuration tuner to execute the identified tuning procedure on the DB system.

In response to the generation of the predicted performance metric, the ML engine/module identifies the tuning procedure by accessing a list of descriptions of performance metrics and their respective specifications and tuning procedures. In the list, each performance metric has its respective description, specification, and a tuning procedure. The list is stored in the memory of the ML system 100. After identifying in the list a description of the generated predicted performance metric, the ML engine/module identifies a corresponding specification for the generated predicted performance metric. When the generated predicted performance metric is out of its specification, the ML engine/module identifies a corresponding tuning procedure and causes the local DB system configuration tuner to execute the identified tuning procedure on the DB system. The aforementioned locally collected status and/or performance information sent by the local DB system configuration tuner to the ML engine/module 114 can be used for training of the ML models on the ML system as described above. The information can be sent on a periodic basis. In this case the ML system 100 or 110 accumulates in its memory the periodically sent information as several time series of data and uses them for training the ML model or the ML module as described above. Alternatively the information can be accumulated in the memory of the DB system and sent in one data package comprising at least one of: a time series of status descriptions, a time series of performance metrics, a time series of descriptions of tuning procedures. The structure of these time series of data is described above. The ML model or the ML module can be trained using data received from several DB systems.

The trained ML model (e.g. computer executable code of the trained model) can be sent to one of the DB systems, even to the DB system from which no data for the training is received (e.g. a DB system 119C). The local DB system configuration tuner 117A-C or the DBMS 120A-B can use the received trained ML model for identification of the tuning procedures as described above. When the ML module/engine 114 and the local DB system configuration tuner 117 A-C (or the ML module/engine 114 and the DBMS 120A-B) comprise the same ML model or their operation is based on the same ML model, only configuration parameters can be transferred from the ML system 100 or 110 to the local DB system configuration tuner 117A-C. The local DB system configuration tuner, in particular its ML model, can be configured using the transferred configuration parameters. The configuration parameters can be generated as a training result of the procedure of the training of the ML module or ML model. The training result may be for instance the configuration parameters, which may be synaptic weight coefficients of a neural network. The training result can be used for configuring the local DB system configuration tuner or the DBMS. After configuration the ML model of the local DB system configuration tuner or the DBMS system operates in the same way as the trained ML module or model.

The training process of the ML module or ML model can be further continued by receiving further data from one or more local DB management tuners. Further trained ML models can be sent to the DB systems. The update can be in a form of a further training result which can be used for configuring of the local DB system configuration tuner as a configuration parameter.

One or more trained machine learning models may be deployed as a cloud-based and/or web-based service that is accessible to the first database management system 120A and/or the second database management system 120B via the network 130. Thus, the detection of anomalies at the first database 125A and/or the second database 125B may also be performed remotely at the cloud management platform 110. The cloud management platform 110 may determine one or more corrective actions when the cloud management platform 110 detects an anomaly at the first database 125A and/or the second database 125B. Furthermore, the cloud management platform 110 may send, to the first database management system 120A and/or the second database management system 120B, an indication to perform the one or more corrective actions.

To further illustrate, the first database management system 120A, for example, the second data engine 132A, may send, to the cloud management platform 110, the performance metrics collected by the first database management system 120A. Alternatively and/or additionally, the second database management system 120B, for example, the third data engine 132B, may also send, to the cloud management platform 110, the performance metrics collected by the second database management system 120B. The cloud management platform 110 may detect anomalies at the first database 125A and/or the second database 125B by at least processing, with the trained machine learning model deployed at the cloud management platform 110, the performance metrics received from the first database management system 120A and/or the second database management system 120B. At least a portion of the performance metrics received from the first database management system 120A and/or the second database management system 120B may also be used as training data for updating one or more trained machine learning models and/or training additional machine learning models. When the cloud management platform 110 detects an anomaly at the first database 125A and/or the second database 125B, the cloud management platform 110 may determine one or more remedial actions for correcting the anomaly. Furthermore, the cloud management platform 110 may send, to the first database management system 120A and/or the second database management system 120B, an indication to perform the one or more remedial actions.

The second data engine 132A and/or the third data engine 132B may be configured to collect performance metrics continuously and/or in accordance to a schedule such as, for example, once every time interval (e.g., x number of minutes). The collection of performance metrics may therefore generate sequences of data such as, for example, time series data, that are indicative of the behavior of the first database 125A and/or the second database 125B over time. Thus, the cloud management platform 110 may train one or more machine learning models configured to process data sequences such as, for example, recurrent neural networks and/or the like. However, it should be appreciated that the cloud management platform 110 may train different and/or additional types of trained machine learning models including, for example, feed forward neural networks, classifiers, decision trees, Bayesian networks, regression analyzers, support vector machines, and/or the like.

It should be appreciated that the data that is transferred between the cloud management platform 110, the first database management system 120A, and/or the second database management system 120B may include structured and/or unstructured data in a raw string format. Furthermore, the data may be in a generic format that is agnostic to the type of machine learning model being sent from the first data engine 112 at the cloud management platform 110 to the second data engine 132A at the first database management system 120A and/or the third data engine 132B at the second database management system 120B. The data format may further be agnostic to the type of performance metrics exchanged between the first data engine 112, the second data engine 132A, and/or the third data engine 132B. As such, no new data interfaces are required to support different and/or additional types of machine learning models and/or performance metrics.

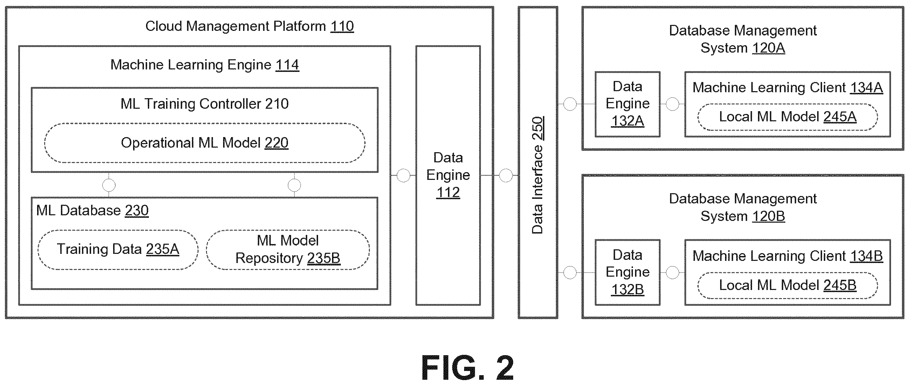

FIG. 2 depicts the machine learning engine 114. Referring to FIGS. 1-2, the machine learning engine 114 may communicate with the first machine learning client 134A at the first database management system 120A and/or the second machine learning client 134B at the second database management system 120B via a data interface 250. Although not shown, the data interface 250 may be part of the cloud platform 110, the first database management system 120A, and/or the second database management system 120B.

The data interface 250 may be configured to translate and/or reformat communications between the first data engine 112, the first database management system 120A, and/or the second database management system 120B. For example, the first data engine 112 may communicate with the second data engine 132A and/or the third data engine 132B in order to propagate one or more trained machine learning models to the first database management system 120A and/or the second database management system 120B. The first data engine 112 may also communicate with the second data engine 132A and/or the third data engine 132B in order to provide, to the first database management system 120A and/or the second database management system 120B, indications to perform remedial actions for correcting anomalies detected at the first database 125A and/or the second database 125B. Alternatively and/or additionally, the second data engine 132A and/or the third data engine 132B may communicate with the first data engine 112 in order to send, to the cloud management platform 110, performance metrics for the first database 125A and/or the second database 125B.

Referring again to FIG. 2, the machine learning engine 114 may include a machine learning training controller 210 and a machine learning database 230. The machine learning database 230 may include training data 235A as well as a machine learning model repository 235B.

The machine learning training controller 210 may be configured to generate one or more trained machine learning models including, for example, the operational machine learning model 220. For example, the machine learning training controller 210 may generate the operational machine learning model 220 by processing at least a portion of the training data 235A with one or more machine learning models from the machine learning model repository 235B. The operational machine learning model 220 may be any type of machine learning model including, for example, a neural network, a classifier, a decision tree, a Bayesian network, a regression analyzer, a support vector machine, and/or the like. As noted, the training data 235A may include performance metrics that are known to correspond to the presence of existing and/or developing anomalies. Furthermore, the training data 235A may include performance metrics received from the first database management system 120A and/or the second database management system 120B.

As shown in FIG. 2, the operational machine learning model 220 may be deployed at the machine learning engine 114. For example, the machine learning training controller 210 may be configured to process, with the operational machine learning model 220, performance metrics received, via the data interface 250, from the second data client 132A at the first machine learning client 134A and/or the third data client 132B at the second machine learning client 134B. In doing so, the machine learning training controller 210 may detect anomalies that are present and/or developing at the first database 125A and/or the second database 125B. When the machine learning training controller 210 detects anomalies at the first database 125A and/or the second database 125B, the machine learning training controller 210 may determine one or more remedial actions for correcting and/or preventing the anomalies. The first data engine 112 may send, via the data interface 250, an indication to perform the one or more remedial actions to the second data engine 132A at the first database management system 120A and/or the third data engine 132B at the second database management system 120B.

Alternatively and/or additionally, the operational machine learning model 220 may also be deployed locally, for example, as a first local machine learning model 245A at the first machine learning client 134A and/or as a second local machine learning model 245B at the second machine learning client 134B. The first machine learning client 134A may detect anomalies at the first database 125A by at least processing, using the first local machine learning model 245A, performance metrics from the first database 125A. In response to detecting one or more anomalies at the first database 125A, the first machine learning client 134A may determine one or more remedial actions for correcting and/or preventing the anomalies. Meanwhile, the second machine learning client 134B may detect anomalies at the second database 125B by at least processing, using the second local machine learning model 245B, performance metrics from the second database 125B. The second machine learning client 134B may respond to the detection of one or more anomalies at the second database 125B by determining one or more remedial actions for correcting and/or preventing the anomalies. The first database management system 120A and/or the second database management system 120B may perform at least some of the remedial actions in order to correct and/or prevent the anomalies at the first database 125A and/or the second database 125B.

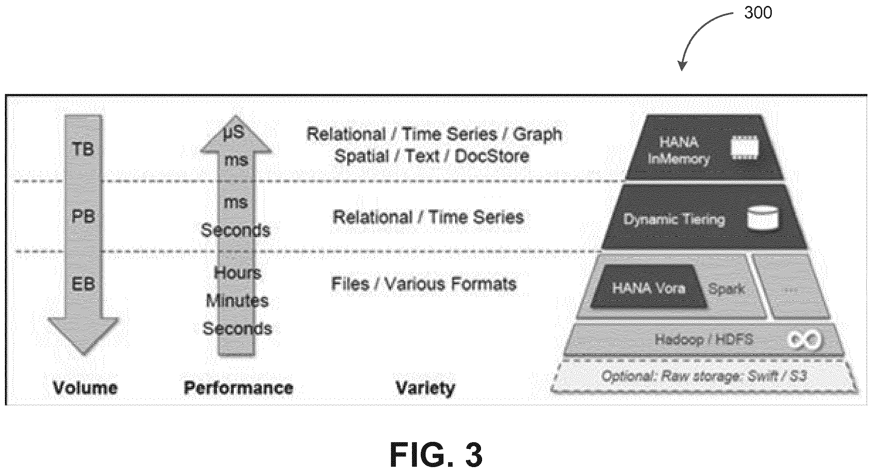

FIG. 3 depicts a data storage scheme 300 for storing the training data 235A. As shown in FIG. 3, the data storage scheme 300 may require storing different varieties of the training data 235A in different storage areas within, for example, the machine learning database 230 based on the age of the training data and/or the performance for accessing the training data. For instance, more recent training data, which may include relational data, time series data, spatial data, textual data, and a document store, may be held in-memory for fast access. Meanwhile, less recent training, which may include files, may be held in a portion of the database, such as mass data storage, that requires more time to access.

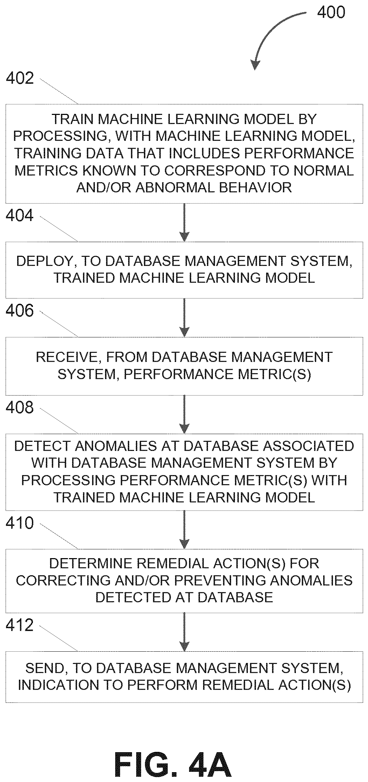

FIG. 4A depicts a flowchart illustrating a process 400 for machine learning based database management. Referring to FIGS. 1-4A, the process 400 may be performed by the cloud management platform 110, the ML system for DB management 100, of for example, by the machine learning engine/module 114.

At 402, the cloud management platform 110 or the ML system for DB management 100 may train a machine learning model by at least processing, with the machine learning model, training data that includes performance metrics that are known to correspond to the presence of existing and/or developing anomalies. For example, the cloud management platform 110 may train one or more machine learning models from the machine learning model repository 235B by processing, with the one or more machine learning models, at least a portion of the training data 235A. In doing so, the cloud management platform 110 may generate the operational machine learning model 220. Other procedures for the training of the ML model and/or ML module are described above.

At 404, the cloud management platform 110 or the ML system for DB management 100 may deploy, to a database management system or to the local DB system configuration tuner, the trained machine learning model. The deployment of the trained ML model can be executed by configuring the local DB system configuration tuner using the training result as a configuration parameter as described above. For example, the operational machine learning model 220 may be deployed as the first local machine learning model 245A at the first machine learning client 134A and/or the second local machine learning model 245B at the second machine learning client 134B. Propagating the operational machine learning model 220 to the first machine learning client 134A and/or the second machine learning client 134B may enable the detection of anomalies to be performed locally, for example, at the first database management system 120A and/or the second database management system 120B. It should be appreciated that the cloud management platform 110 may continue to update the first local machine learning model 245A and/or the second machine learning model 245B. Furthermore, as noted, the operational machine learning model 220 may also be deployed at the cloud management platform 110 and accessed as a cloud-based and/or a web-based service.

At 406, the cloud management platform 110 or the ML system for DB management 100 may receive, from a database management system, a DB system, or a local DB system configuration tuner of the DB system, at least one of the following data: one or more performance metrics, one or more descriptions of DB system status, one or more descriptions of tuning operations executed for tuning a configuration of the DB system. For example, the first data engine 112 at the cloud management platform 110 may receive, from the second data engine 132A at the first database management system 120A, performance metrics for the first database 125A. Alternatively and/or additionally, the first data engine 112 at the cloud management platform 110 may receive, from the third data engine 132B at the second database management system 120B, performance metrics for the second database 125B. The performance metrics may include, for example, performance per SQL statement, application performance per dialog step, database central processing unit (CPU) utilization, database memory consumption, application errors, database update process errors, and/or the like.

At 408, the cloud management platform 110 or the ML system for DB management 100 may detect anomalies at a database associated with the database management system by at least processing the one or more performance metrics with the trained machine learning model. For example, the cloud management platform 110 may process, with the operational machine learning model 220, the performance metrics received from the first database management system 120A and/or the second database management system 120B. Processing the performance metrics with the operational machine learning model 220 may enable the cloud management platform 110 to detect one or more anomalies such as, for example, bottlenecks and/or the like, at the first database 125A and/or the second database 125B. As noted, these anomalies may be present and/or developing at the first database 125A and/or the second database 125B. Other procedures for detecting the anomaly are described above.

At 410, the cloud management platform 110 or the ML system for DB management 100 may determine one or more remedial actions for correcting and/or preventing the anomalies detected at the database. The one or more procedures can be one or more tuning procedures for tuning of the configuration of the DB system. For instance, the cloud management platform 110 may determine remedial actions for correcting the anomalies that are present and/or developing within the first database 125A and/or the second database 125B. The remedial actions may include, for example, a parameter change at the first database 125A and/or the second database 125B, a parameter change for one or more applications running at the first database 125A and/or the second database 125B, and/or the like. Alternatively the cloud management platform 110 or the ML system for DB management 100 may identify one or more tuning procedures for tuning of the configuration of the DM system using the received in process block 406 data as described above.

At 412, the cloud management platform 110 or the ML system for DB management 100 may send, to the database management system or the local DB system configuration tuner, an indication to perform the one or more remedial actions. For example, the first data engine 132A at the cloud management platform 110 may send, to the second data engine 132A at the first database management system 120A and/or the third data engine 132B at the second database management system 120B, an indication to perform the remedial actions for correcting the anomalies detected at the first database 125A and/or the second database 125B.

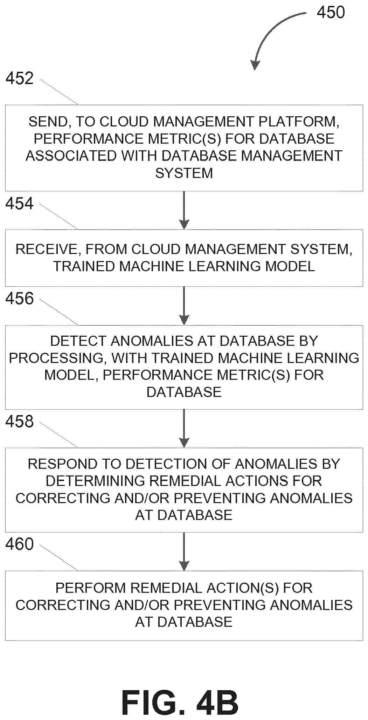

FIG. 4B depicts a flowchart illustrating a process 450 for machine learning based database management. Referring to FIGS. 1-4B, the process 450 may be performed by the local DB system configuration tuner or a database management system such as, for example, the first database management system 120A, the second database management system 120B, the first local DB system configuration tuner 117A, the second local DB system configuration tuner 117B, the third local DB system configuration tuner 117C.

At 452, a database management system or the local DB system configuration tuner may send, to the cloud management platform 110 or the ML system for DB management 100, at least one of the following data: one or more performance metrics for a database associated with the database management system, one or more performance metrics of the DB system, one or more descriptions of the DB system status, one or more descriptions of tuning operations executed for tuning a configuration of the DB system. The detection of anomalies may be performed by a trained machine learning model (e.g., the operational machine learning model 220) that is deployed as a web-based and/or cloud-based service at the cloud management platform 110 or the local DB system configuration tuner 117A. As such, the second data engine 132A at the first database management system 120A (or the first local DB system configuration tuner 117A at the first DB system 119A) and/or the third data engine 132B at the second database management system 120B (or the second local DB system configuration tuner 117B at the second DB system 119B) may send, to the first data engine 112 at the cloud management platform 110 or to ML module/engine 114 at the ML system for DB management 100 , one or more performance metrics for the first database 125A, the second database 125B, one or more performance metrics of the first DB system, one or more performance metrics of the second DB system, one or more descriptions of the first DB system status, one or more descriptions of the second DB system status, one or more descriptions of tuning operations executed for tuning a configuration of the first DB system, and/or one or more descriptions of tuning operations executed for tuning a configuration of the second DB system. The cloud management platform 110 or the local DB system configuration tuner 117A at may process, with the operational machine learning model 220, received data including the performance metrics received from the first database management system 120A and/or the second database management system 120B in order to detect anomalies that may be present and/or developing at the first database 125A and/or the second database 125B. Alternatively and/or additionally, the received data including performance metrics from the first database management system 120A and/or the second database management system 120B may be added to the training data 235A and used for updating one or more trained machine learning models and/or training additional machine learning models. Further aspects of the training of the ML module or the ML model are described above. Alternatively a training result can be generated at 542 as described above.

At 454, the database management system or the DB system may receive, from the cloud management platform 110 or the ML system for DB management 100, a trained machine learning model. As noted, a trained machine learning model such as, for example, the operational machine learning model 220, may be deployed locally at the first database management system 120A and/or the second database management system 120B instead of and/or in addition to being deployed at the cloud management platform 110. For instance, the first data engine 112 at the cloud management platform 110 may send, to the second data engine 132A at the first database management system 120A and/or the third data engine 132B at the second database management system 120B, the operational machine learning model 220 such that the operational machine learning model 220 may be deployed as the first local machine learning model 245A at the first machine learning client 134A and/or the second local machine learning model 245B at the second machine learning client 134B. Deploying the operational machine learning model 220 locally may enable the detection of anomalies to be performed locally, for example, at the first database management system 120A and/or the second database management system 120B. As mentioned above the trained ML model can be deployed at the local DB system configuration tuner of the DB system. Alternatively the local DB system configuration tuner can be configured using the training result obtained at 542 as a configuration parameter as described above.

At 456, the database management system may detect one or more anomalies at the database by at least processing, with the trained machine learning model, one or more performance metrics for the database. For example, the first database management system 120A may process, with the first local machine learning model 245A, one or more performance metrics for the first database 125A, thereby detecting anomalies that may be present and/or developing at the first database 125A. Alternatively and/or additionally, the second database management system 120B may process, with the second local machine learning model 245B, one or more performance metrics for the second database 125B, thereby detecting anomalies that may be present and/or developing at the second database 125B. As noted, the performance metrics may include, for example, performance per SQL statement, application performance per dialog step, database central processing unit (CPU) utilization, database memory consumption, application errors, database update process errors, and/or the like. Alternatively the anomaly can be detected by the local DB system configuration tuner as described above.

At 458, the database management system may respond to the detection of one or more anomalies at the database by at least determining one or more remedial actions for correcting and/or preventing the one or more anomalies at the database. For instance, the first database management system 120A may determine remedial actions such as, for example, a parameter change at the first database 125A, a parameter change for one or more applications running at the first database 125A, and/or the like. Similarly, the second database management system 120B may determine remedial actions for correcting anomalies that are present and/or developing at the second database 125B. Alternatively, in response to the detection of the anomaly, the local DB system configuration tuner can identify the tuning procedure for tuning the configuration of the DB system as described above.

At 460, the database management system may perform the one or more remedial actions for correcting and/or preventing the one or more anomalies at the database. For instance, the first database management system 120A may perform one or more remedial actions for correcting the anomalies that are present and/or developing within the first database 125A. Similarly, the second database management system 120B may also perform one or more remedial actions for correcting anomalies that are present and/or developing at the second database 125B. Alternatively, the local DB system configuration tuner executes the identified tuning procedure on the DB system.

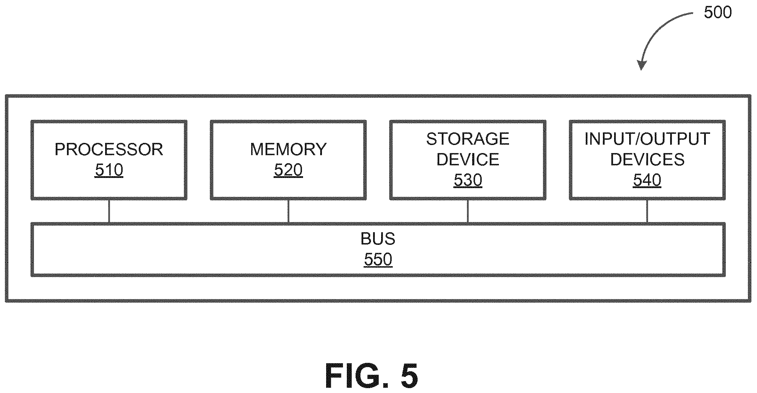

FIG. 5 depicts a block diagram illustrating a computing system 500 consistent with implementations of the current subject matter. Referring to FIGS. 1 and 5, the computing system 500 can be used to implement the cloud management platform 110, the first database management system 120A, the second database management system 120B, and/or any components therein.

As shown in FIG. 5, the computing system 500 can include a processor 510, a memory 520, a storage device 530, and input/output devices 540. The processor 510, the memory 520, the storage device 530, and the input/output devices 540 can be interconnected via a system bus 550. The processor 510 is capable of processing instructions for execution within the computing system 500. Such executed instructions can implement one or more components of, for example, the cloud management platform 110, the first database management system 120A, and/or the second database management system 120B. The processor 510 can be a single-threaded processor. Alternately, the processor 510 can be a multi-threaded processor. The processor 510 is capable of processing instructions stored in the memory 520 and/or on the storage device 530 to display graphical information for a user interface provided via the input/output device 540.

The memory 520 is a computer readable medium such as volatile or nonvolatile that stores information within the computing system 500. The memory 520 can store data structures representing configuration object databases, for example. The storage device 530 is capable of providing persistent storage for the computing system 500. The storage device 530 can be a floppy disk device, a hard disk device, an optical disk device, or a tape device, or other suitable persistent storage means. The input/output device 540 provides input/output operations for the computing system 500. The input/output device 540 includes a keyboard and/or pointing device. In various implementations, the input/output device 540 includes a display unit for displaying graphical user interfaces.

The input/output device 540 can provide input/output operations for a network device. For example, the input/output device 540 can include Ethernet ports or other networking ports to communicate with one or more wired and/or wireless networks (e.g., a local area network (LAN), a wide area network (WAN), the Internet).

The computing system 500 can be used to execute various interactive computer software applications that can be used for organization, analysis and/or storage of data in various formats. Alternatively, the computing system 500 can be used to execute any type of software applications. These applications can be used to perform various functionalities, e.g., planning functionalities (e.g., generating, managing, editing of spreadsheet documents, word processing documents, and/or any other objects, etc.), computing functionalities, communications functionalities, etc. The applications can include various add-in functionalities (e.g., SAP Integrated Business Planning as an add-in for a spreadsheet and/or other type of program) or can be standalone computing products and/or functionalities. Upon activation within the applications, the functionalities can be used to generate the user interface provided via the input/output device 540. The user interface can be generated and presented to a user by the computing system 500 (e.g., on a computer screen monitor, etc.).

One or more aspects or features of the subject matter described herein can be realized in digital electronic circuitry, integrated circuitry, specially designed ASICs, field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example, as would a processor cache or other random access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including acoustic, speech, or tactile input. Other possible input devices include touch screens or other touch-sensitive devices such as single or multi-point resistive or capacitive track pads, voice recognition hardware and software, optical scanners, optical pointers, digital image capture devices and associated interpretation software, and the like.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other implementations may be within the scope of the following claims

## Claims

1. A machine learning, ML, system (110) for database, DB, system (119A-C) management, the ML system comprising an ML module (114) and at least a first (119A) and a second (119B) DB system, the ML module being coupled to the first and the second DB system for receiving respective sets of DB status information, wherein the ML system is configured to generate a training result by training the ML module using the sets of DB status information, the training result being descriptive of a configuration of the trained ML module, at least the first DB system comprising a first local DB system configuration tuner (117A) for tuning a configuration of the first DB system, wherein the first DB system is configured to receive the training result and to configure the first local DB system configuration tuner using the training result as a configuration parameter.

2. The ML system of claim 1, wherein the ML system is coupled to the first DB system and the second DB system via one or more computer networks (130).

3. The ML system of any one of preceding claims, wherein the ML system comprises a third DB system (119C), the third DB system comprising a third local DB system configuration tuner (117C) for tuning a configuration of the third DB system, wherein the third DB system is configured to receive the training result obtained by the ML system and to configure the third local DB system configuration tuner using the training result as a configuration parameter therefore.

4. The ML system of any one of the preceding claims, the ML module being coupled to the first and the second DB system for receiving further respective sets of DB status information, wherein the ML system is configured to generate a further training result by further training the ML module using the further sets of DB status information, the further training result being descriptive of a configuration of the further trained ML module, wherein the first DB system is configured to receive the further training result and to configure the first local DB system configuration tuner using the further training result as a configuration parameter.

5. The ML system of any of the preceding claims, wherein the ML system comprises a server, the server being configured for providing the coupling of the ML module to the first and the second database, the server comprising the ML module.

6. The ML of any of the preceding claims, wherein operation of the ML module and the first local DB system configuration tuner is based on at least one of the following ML models: a neural network, a classifier, a decision tree, a Bayesian network, a regression analyzer, and a support vector machine.

7. The ML system on any of the preceding claims, wherein the configured first local DB system configuration tuner is configured to identify a tuning procedure for tuning the configuration of the first DB system in accordance with an actual status of the first DB system and to execute the identified tuning procedure.

8. The ML system of any of the preceding claims, wherein the trained ML module is configured to receive an actual status of the first DB system and to identify a tuning procedure for tuning the configuration of the first DB system in accordance with the received actual status of the first DB system, wherein the first local DB system configuration tuner is configured to execute the tuning procedure identified by the trained ML module.

9. The ML system of any one of the preceding claims, wherein the set of DB status information received from the first DB system comprises a first time series of first descriptions each being descriptive of an actual status of the first DB system at a respective point of time, wherein the set of DB status information received from the second DB system comprises a second time series of second descriptions each being descriptive of an actual status of the second DB system at a respective point of time.

10. The ML system of claim 9, wherein the set of DB status information received from the first DB system further comprises descriptions of tuning procedures executed for tuning of the configuration of the first DB system in a time interval of the first time series, wherein the set of DB status information received from the second DB system further comprises descriptions of tuning procedures executed for tuning of a configuration of the second DB system in a time interval of the second time series.

11. The ML system of any one of the preceding claims 1 through 6,
wherein the set of DB status information received from the first DB system comprises a first time series of first descriptions each being descriptive of an actual status of the first DB system at a respective point of time,
wherein the set of DB status information received from the second DB system comprises a second time series of second descriptions each being descriptive of an actual status of the second DB system at a respective point of time,
wherein the first DB system is configured to generate another first time series of first performance metrics, wherein the generation of the other first time series of the first performance metrics comprises generating, for each of the first descriptions, the first performance metric being descriptive of an actual performance of the first DB system at the point of time at which the each of the first descriptions is descriptive of the actual performance of the first DB system,
wherein the second DB system is configured to generate another second time series of second performance metrics, wherein the generation of the second time series comprises generating, for each of the second descriptions, the second performance metric being descriptive of an actual performance of the second DB system at the point of time at which the each of the second descriptions is descriptive of the actual performance of the second DB system,
wherein the generating of the training result by training the ML module using the sets of DB status information comprises training the ML module using a first and a second training data, the first training data comprising input data being the first time series of the first descriptions data and expected output data being the other first time series of the first performance metrics, the second training data comprising input data being the second time series of the second descriptions and expected output data being the other second time series of the second performance metrics,
wherein the configured first local DB system configuration tuner is configured to obtain a predicted first performance metric being descriptive of an expected performance of the first DB at a future point of time by processing one or more first descriptions each being descriptive of an actual status of the first DB system at a respective point of time,
wherein the configured first local DB system configuration tuner is configured to tune the configuration of the first DB system by executing a tuning procedure for tuning of the configuration of the first DB system, when the predicted first performance metric is out of a specification of the first performance metric.

12. The ML system of any one of the preceding claims 1 through 6,
wherein the set of DB status information received from the first DB system comprises a first time series of first performance metrics each being descriptive of an actual performance of the first DB system at a respective point of time,
wherein the set of DB status information received from the second DB system comprises a second time series of second performance metrics each being descriptive of an actual performance of the second DB system at a respective point of time,
wherein the generating of the training result by training the ML module using the sets of DB status information comprises training the ML module using the first time series of the first performance metrics and the second time series of the second performance metrics as training data, wherein the trained ML module is configured to detect an anomaly being present and/or developing in a DB system by processing one or more performance metrics each being descriptive of an actual performance of the DB system at a respective point of time,
wherein the configured first local DB system configuration tuner is configured to detect an anomaly being present and/or developing in the first DB system by processing one or more first performance metrics each being descriptive of an actual performance of the first DB system at a respective point of time,
wherein the configured first local DB system configuration tuner is configured to tune the configuration of the first DB system by executing a tuning procedure for tuning of the configuration of the first DB system in response to the detection of the anomaly being present and/or developing in the first DB system.

13. The ML system of any one of the preceding claims 1 through 6,
wherein the set of DB status information received from the first DB system comprises:
- a first time series of first descriptions each being descriptive of an actual status of the first DB system at a respective point of time and
- another first time series of descriptions of tuning procedures executed for tuning the configuration of the first DB system in a time interval of the first time series,
wherein the set of DB status information received from the second DB system comprises:
- a second time series of second descriptions each being descriptive of an actual status of the second DB system at a respective point of time and
- another second time series of descriptions of tuning procedures executed for tuning a configuration of the second DB system in a time interval of the second time series,
wherein the generating of the training result by training the ML module using the sets of DB status information comprises training the ML module
using a first and a second training data, the first training data comprising input data being the first time series of the first descriptions and expected output data being the other first time series of the descriptions, the second training data comprising input data being the second time series of the second descriptions and expected output data being the other second time series of the descriptions,
wherein the configured first local DB system configuration tuner is configured to identify a tuning procedure for tuning the configuration of the first DB system by processing one or more first descriptions each being descriptive of an actual status of the first DB system at a respective point of time and to execute the identified tuning procedure.

14. A machine learning, ML, system (110) for DB system (119A-C) management, the ML system comprising a ML module (114), the ML system being configured to:
- receive respective sets of DB status information from a first (119A) and a second (119B) DB system, wherein the first DB system comprises a first local DB system configuration tuner (117A) for tuning a configuration of the first DB system,
- generate a training result by training the ML module using the sets of DB status information, wherein the training result is descriptive of a configuration of the trained ML module,
- transfer the training result to the first DB system, and
- cause the first DB system to configure the first local DB system configuration tuner using the training result as a configuration parameter.

15. A computer program comprising instructions that enable a processor-based machine learning, ML, system (110) for DB system (119A-C) management to:
- receive respective sets of DB status information from a first and a second DB system, wherein the first DB system comprises a first local DB system configuration tuner (117A) for tuning a configuration of the first DB system,
- generate a training result by training a ML module (114) of the ML system using the sets of DB status information, wherein the training result is descriptive of a configuration of the trained ML module,
- transfer the training result to the first DB system, and
- cause the first DB system to configure the first local DB system configuration tuner using the training result as a configuration parameter.

16. A database, DB, system (119A), the DB system comprising a local DB system configuration tuner (117A) for tuning a configuration of the DB system, the DB system being configured to:
- transfer a set of DB status information of the DB system to a machine learning, ML, module (114) of an ML system (110) for managing at least the DB system (119A) and another DB system (119B),
- receive, from the ML system, a training result, wherein the training result is generated by training the ML module using the set of DB status information and another set of DB status information of the other DB system, and
- configure the local DB system configuration tuner using the received training result as a configuration parameter.

## Amended claims

### Amended claims in accordance with Rule 137(2) EPC.

1. A machine learning, ML, system (110) for database, DB, system (119A-C) management, the ML system (110) comprising an ML module (114) and at least a first (119A) and a second (119B) DB system, the ML module (114) being coupled to the first (119A) and the second (119B) DB system for receiving respective sets of DB status information, wherein the ML system (110) is configured to generate a training result by training the ML module (114) using the sets of DB status information, the training result being descriptive of a configuration of the trained ML module (114), at least the first DB system (119A) comprising a first local DB system configuration tuner (117A) for tuning a configuration of the first DB system (119A), wherein the first DB system (119A) is configured to receive the training result and to configure the first local DB system configuration tuner (117A) using the training result as a configuration parameter, wherein the first configured local DB system configuration tuner (117A) is operable to autonomously tune the first DB system (119A).

2. The ML system of claim 1, wherein the ML system (110) is coupled to the first DB system (119A) and the second DB system (119B) via one or more computer networks (130).

3. The ML system of any one of preceding claims, wherein the ML system (110) comprises a third DB system (119C), the third DB system (119C) comprising a third local DB system configuration tuner (117C) for tuning a configuration of the third DB system (119C), wherein the third DB system (119C) is configured to receive the training result obtained by the ML system and to configure the third local DB system configuration tuner (117C) using the training result as a configuration parameter therefore.

4. The ML system (110) of any one of the preceding claims, the ML module (110) being coupled to the first (119A) and the second (119B) DB system for receiving further respective sets of DB status information, wherein the ML system (110) is configured to generate a further training result by further training the ML (114) module using the further sets of DB status information, the further training result being descriptive of a configuration of the further trained ML module (114), wherein the first DB system (119A) is configured to receive the further training result and to configure the first local DB system configuration tuner (117A) using the further training result as a configuration parameter.

5. The ML system (110) of any of the preceding claims, wherein the ML system (110) comprises a server, the server being configured for providing the coupling of the ML module (114) to the first (119A) and the second (119B) DB system, the server comprising the ML module (114).

6. The ML of any of the preceding claims, wherein operation of the ML module (114) and the first local DB system configuration tuner (117A) is based on at least one of the following ML models: a neural network, a classifier, a decision tree, a Bayesian network, a regression analyzer, and a support vector machine.

7. The ML system (110) of any of the preceding claims, wherein the configured first local DB system configuration tuner (117A) is configured to identify a tuning procedure for tuning the configuration of the first DB system (119A) in accordance with an actual status of the first DB system (119A) and to execute the identified tuning procedure.

8. The ML system (110) of any of the preceding claims, wherein the trained ML module (114) is configured to receive an actual status of the first DB system (119A) and to identify a tuning procedure for tuning the configuration of the first DB system (119A) in accordance with the received actual status of the first DB system (119A), wherein the first local DB system configuration tuner (117A) is configured to execute the tuning procedure identified by the trained ML module (114).

9. The ML system (110) of any one of the preceding claims, wherein the set of DB status information received from the first DB system (119A) comprises a first time series of first descriptions each being descriptive of an actual status of the first DB system (119A) at a respective point of time, wherein the set of DB status information received from the second DB system (119B) comprises a second time series of second descriptions each being descriptive of an actual status of the second DB system (119A) at a respective point of time.

10. The ML system (110) of claim 9, wherein the set of DB status information received from the first DB system (119A) further comprises descriptions of tuning procedures executed for tuning of the configuration of the first DB system (119A) in a time interval of the first time series, wherein the set of DB status information received from the second DB system (119B) further comprises descriptions of tuning procedures executed for tuning of a configuration of the second DB system (119B) in a time interval of the second time series.

11. The ML system (110) of any one of the preceding claims 1 through 6,
wherein the set of DB status information received from the first DB system (119A) comprises a first time series of first descriptions each being descriptive of an actual status of the first DB system (119A) at a respective point of time,
wherein the set of DB status information received from the second DB system (119A) comprises a second time series of second descriptions each being descriptive of an actual status of the second DB system (119A) at a respective point of time,
wherein the first DB system (119A) is configured to generate another first time series of first performance metrics, wherein the generation of the other first time series of the first performance metrics comprises generating, for each of the first descriptions, the first performance metric being descriptive of an actual performance of the first DB system (119A) at the point of time at which the each of the first descriptions is descriptive of the actual performance of the first DB system (119A),
wherein the second DB system (119B) is configured to generate another second time series of second performance metrics, wherein the generation of the second time series comprises generating, for each of the second descriptions, the second performance metric being descriptive of an actual performance of the second DB system (119B) at the point of time at which the each of the second descriptions is descriptive of the actual performance of the second DB system (119B),
wherein the generating of the training result by training the ML module (114) using the sets of DB status information comprises training the ML module (114) using a first and a second training data, the first training data comprising input data being the first time series of the first descriptions data and expected output data being the other first time series of the first performance metrics, the second training data comprising input data being the second time series of the second descriptions and expected output data being the other second time series of the second performance metrics,
wherein the configured first local DB system configuration tuner (117A) is configured to obtain a predicted first performance metric being descriptive of an expected performance of the first DB system (119A) at a future point of time by processing one or more first descriptions each being descriptive of an actual status of the first DB system (119A) at a respective point of time,
wherein the configured first local DB system configuration tuner (117A) is configured to tune the configuration of the first DB system (119A) by executing a tuning procedure for tuning of the configuration of the first DB system (119A), when the predicted first performance metric is out of a specification of the first performance metric .

12. The ML system (110) of any one of the preceding claims 1 through 6,
wherein the set of DB status information received from the first DB system (119A) comprises a first time series of first performance metrics each being descriptive of an actual performance of the first DB system (119A) at a respective point of time,
wherein the set of DB status information received from the second DB system (119B) comprises a second time series of second performance metrics each being descriptive of an actual performance of the second DB system (119B) at a respective point of time,
wherein the generating of the training result by training the ML module (114) using the sets of DB status information comprises training the ML module (114) using the first time series of the first performance metrics and the second time series of the second performance metrics as training data, wherein the trained ML module (114) is configured to detect an anomaly being present and/or developing in a DB system by processing one or more performance metrics each being descriptive of an actual performance of the DB system at a respective point of time,
wherein the configured first local DB system configuration tuner (117A) is configured to detect an anomaly being present and/or developing in the first DB system (119A) by processing one or more first performance metrics each being descriptive of an actual performance of the first DB system (119A) at a respective point of time,
wherein the configured first local DB system configuration tuner (117A) is configured to tune the configuration of the first DB system (119A) by executing a tuning procedure for tuning of the configuration of the first DB system (119A) in response to the detection of the anomaly being present and/or developing in the first DB system (119A).

13. The ML system (110) of any one of the preceding claims 1 through 6,
wherein the set of DB status information received from the first DB system (119A) comprises:
- a first time series of first descriptions each being descriptive of an actual status of the first DB system (119A) at a respective point of time and
- another first time series of descriptions of tuning procedures executed for tuning the configuration of the first DB system (119A) in a time interval of the first time series,
wherein the set of DB status information received from the second DB system (119B) comprises:
- a second time series of second descriptions each being descriptive of an actual status of the second DB system (119B) at a respective point of time and
- another second time series of descriptions of tuning procedures executed for tuning a configuration of the second DB system (119B) in a time interval of the second time series,
wherein the generating of the training result by training the ML module (114) using the sets of DB status information comprises training the ML module (114) using a first and a second training data, the first training data comprising input data being the first time series of the first descriptions and expected output data being the other first time series of the descriptions, the second training data comprising input data being the second time series of the second descriptions and expected output data being the other second time series of the descriptions,
wherein the configured first local DB system configuration tuner (117A) is configured to identify a tuning procedure for tuning the configuration of the first DB system (119A) by processing one or more first descriptions each being descriptive of an actual status of the first DB system (119A) at a respective point of time and to execute the identified tuning procedure.

14. A machine learning, ML, system (110) for DB system (119A-C) management, the ML system (110) comprising a ML module (114), the ML system (110) being configured to:
- receive respective sets of DB status information from a first (119A) and a second (119B) DB system, wherein the first DB system (119A) comprises a first local DB system configuration tuner (117A) for tuning a configuration of the first DB system (119A),
- generate a training result by training the ML module (114) using the sets of DB status information, wherein the training result is descriptive of a configuration of the trained ML module (114),
- transfer the training result to the first DB system (119A), and
- cause the first DB system (119A) to configure the first local DB system configuration tuner (117A) using the training result as a configuration parameter, wherein the first configured local DB system configuration tuner (117A) is operable to autonomously tune the first DB system (119A).

15. A computer program comprising instructions that enable a processor-based machine learning, ML, system (110) for DB system (119A-C) management to:
- receive respective sets of DB status information from a first (119A) and a second (119B) DB system, wherein the first DB system (119A) comprises a first local DB system configuration tuner (117A) for tuning a configuration of the first DB system (119A),
- generate a training result by training a ML module (114) of the ML system using the sets of DB status information, wherein the training result is descriptive of a configuration of the trained ML module (114),
- transfer the training result to the first DB system (119A), and
- cause the first DB system (119A) to configure the first local DB system configuration tuner (117A) using the training result as a configuration parameter, wherein the first configured local DB system configuration tuner (117A) is operable to autonomously tune the first DB system (119A).

16. A database, DB, system (119A), the DB system comprising a local DB system configuration tuner (117A) for tuning a configuration of the DB system (119A), the DB system (119A) being configured to:
- transfer a set of DB status information of the DB system (119A) to a machine learning, ML, module (114) of an ML system (110) for managing at least the DB system (119A) and another DB system (119B),
- receive, from the ML system (110), a training result, wherein the training result is generated by training the ML module (114) using the set of DB status information and another set of DB status information of the other DB system (119B), and
- configure the local DB system configuration tuner (117A) using the received training result as a configuration parameter, wherein the first configured local DB system configuration tuner (117A) is operable to autonomously tune the first DB system (119A).
